# EUROPEAN PATENT APPLICATION

(11) **EP 0 538 533 A1**
(43) Date of publication of application: **28.04.1993**
(21) Application number: 91402862.6
(22) Date of filing: 25.10.1991
(51) Int. Cl.: G02F 1/136, G09G 3/36

(54) **Thin film liquid crystal matrixes with improved structure**

(71) Applicant: GOLDSTAR CO. LTD., Seoul (KR)
(72) Inventor: Kim Jeong Jae, Yangchon-ku, Seoul (KR)
(74) Representative: Fort, Jacques

(57) **Abstract**

A thin film liquid crystal matrix comprising lower and upper substrates spaced from each other to define a space containing liquid crystal therein. The lower substrate has pixel electrodes (34) and gate bus lines (GB1-GBn) arranged to provide thin film transistors (30) each having a drain electrode (31) provided by one pixel electrode, a gate electrode (32) by one corresponding gate bus line and a source electrode (33) provided by next corresponding gate bus line. Also, the upper substrate has source bus lines (SB1-SBn) arranged to function as upper electrodes corresponding to respective pixels and each having the same color as that of corresponding pixel electrode on the lower substrate. With this arrangement, there is no cross-over part between gate bus lines and source bus lines, thereby improving yield of picture images. The thin film liquid crystal matrix is effective on thin film liquid crystal color television.

## Description

### BACKGROUND OF THE INVENTION

The present invention relates to thin film liquid crystal matrixes for thin film transistors used for liquid crystal color TV and etc., and more particularly to a thin film liquid crystal matrix with an improved structure capable of eliminating cross-over parts between source bus lines and gate bus lines on the matrix.

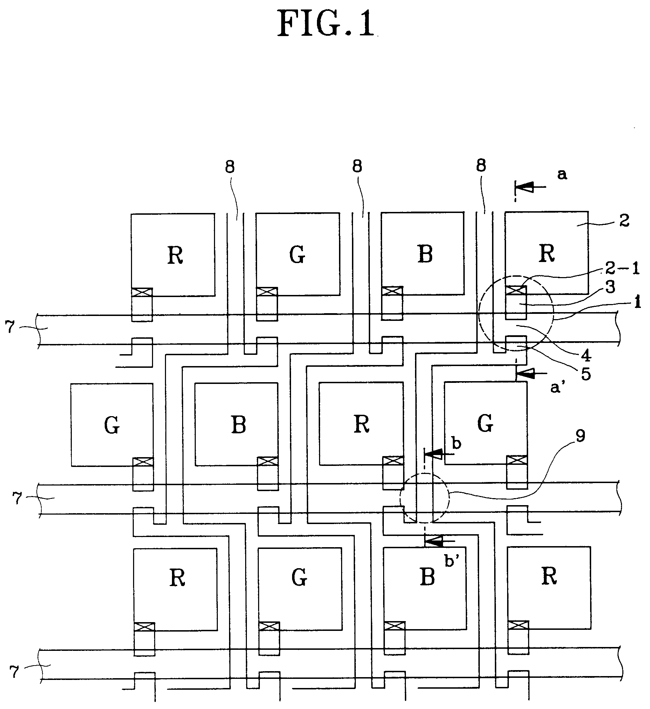

Referring to FIG. 1, there is shown the construction of a lower substrate of a conventional thin film liquid crystal matrix. As shown in the drawing, the lower substrate of thin film liquid crystal matrix comprises a plurality of R, G and B pixel electrodes 2, a plurality of thin film transistors 1 for controlling the R, G and B pixel electrodes 2, respectively, and a plurality of source bus lines 8 and gate bus lines 7 for supplying video signals and scanning signals to the thin film transistors 1.

Pixel electrodes 2 are arranged in triangular manner such that three R, G and B pixel electrodes form a triangular shape. At one end of each pixel electrode 2, a drain electrode 3 is provided which is connected with the corresponding pixel electrode 2, by means of a contact 2-1. Each source bus line 8 is arranged to extend longitudinally between adjacent corresponding pixel electrodes 2. Each source bus line 8 has lateral extensions each of which forms a source electrode 5 facing the corresponding drain electrode 13 to define a certain space therebetween. Each gate bus line 7 is arranged to extend laterally between adjacent corresponding pixel electrodes 2 and at a level higher than that of each source bus line 8. Each gate bus line 7 constitutes a gate electrode 4, while each drain electrode 3 together with each corresponding source electrode 5 constitute each thin film transistor1.

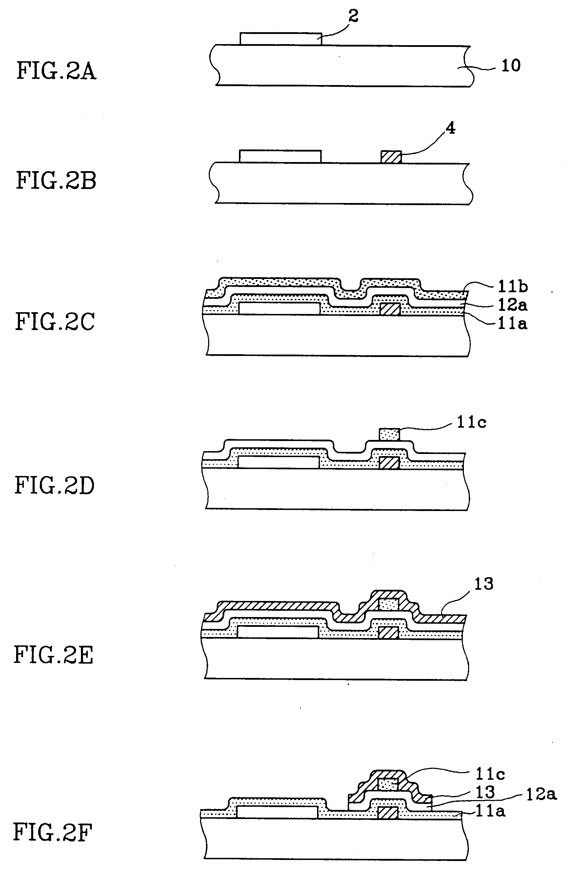

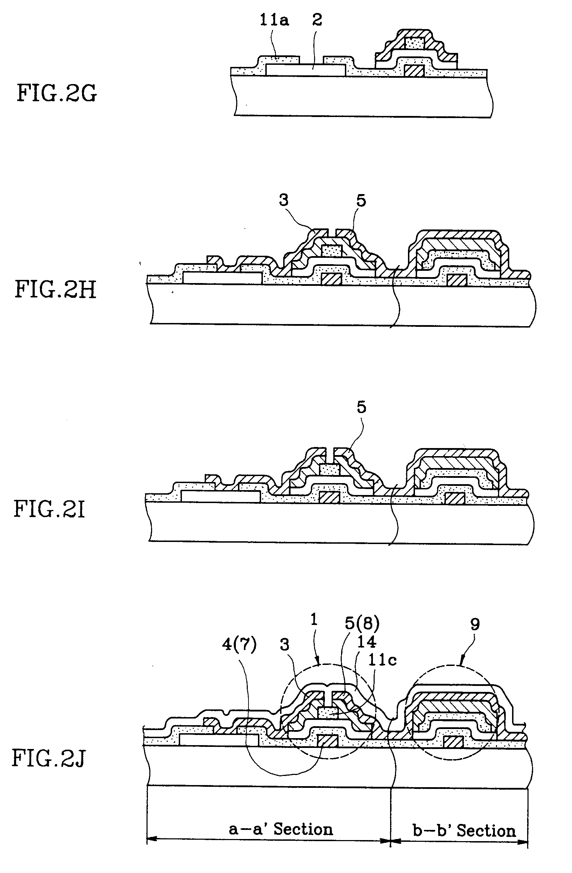

FIGs. 2A to 2J illustrate a process for manufacturing the lower substrate shown in FIG.1. As shown in FIGs. 2A and 2B, ITO(Indium tin Oxide) pixel electrodes 2 and gate electrodes 4 are evaporated on the upper surface of a glass substrate 10 and patterned to have certain patterns, respectively. Thereafter, evaporation of a SiN layer 11a, an a-Si layer 12a and a SiN layer 11b is carried out to stack them in order on the glass substrate 10, as shown in FIG. 2C. The SiN layer 11b is then patterned only to form SiN layers 11c each having the size corresponding to that of each gate electrode 4, as shown in FIG. 2D. Subsequently, a n⁺a-Si layer 13 is coated as shown in FIG. 2E. The n⁺ a-Si layer 13 and the a-Si layer 12a are then simultaneously patterned as shown in FIG. 2F. Thereafter, the SiN layer 11a is partially etched such that the ITO pixel electrodes 2 are partially exposed, as shown in FIG. 2G. On the n⁺a-Si layer 13, drain electrodes 3 are evaporated to be in contact with respective exposed portions of ITO pixel electrodes 2, as shown in FIG. 2H. Simultaneously, source electrodes 5 are evaporated. Between adjacent ends of each drain electrode 3 and each corresponding source electrode 5, the n⁺a-Si layer 13 is partially etched such the SiN layer 11c is exposed partially, as shown in FIG. 2I. Thereafter, a SiN passivation layer 14 is evaporated on the entire upper surface of the substrate to be in contact with exposed portions of the SiN layer 11c. Thus, the manufacturing of the lower substrate is completed. In FIG. 2J, the A-A' cross-section shows the thin film transistor(1) and the B-B' cross-section shows one of cross-over parts 9 of gate bus lines 7 and source bus lines 8 of Fig. 1.

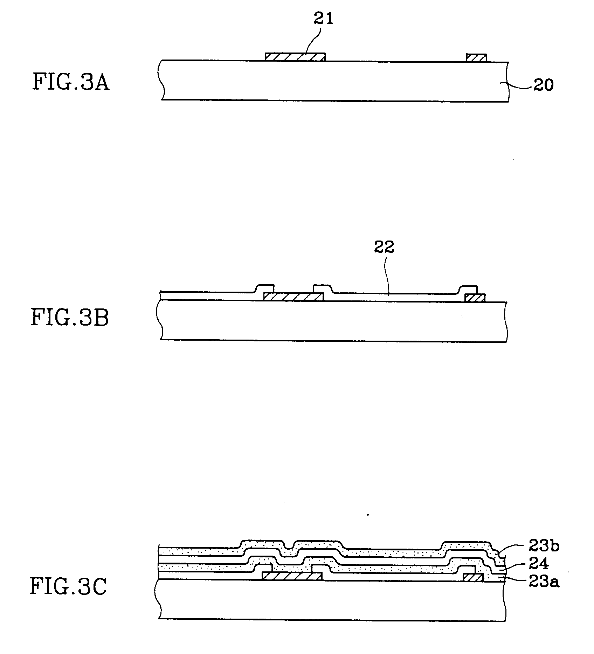

On the other hand, FIGs. 3A to 3C illustrate a process for manufacturing an upper substrate of a conventional thin film liquid crystal matrix. A Cr layer 21 is evaporated on the upper surface of a glass substrate 20 and patterned to have a certain pattern shown in FIG. 3A. Thereafter, color filters 22 corresponding to respective R, G and B pixels are evaporated on the substrate 20 and patterned to have a certain pattern such that the Cr layer 21 is partially exposed at various areas and exposed portions thereof are separated from one another by the color filters 22, as shown in FIG. 3B. Thereafter, evaporation of a SiN layer 23a, an ITO common pixel electrode 24 and another SiN layer 23b are carried out to stack them in order on the entire upper surface of substrate 20, as shown in FIG. 3C. Thus, the manufacturing of the upper substrate is completed.

A liquid crystal matrix is manufactured by facing lower and upper substrates to define a space therebetween, filling liquid crystal in the space and then sealing the space.

Operation of such a conventional crystal matrix will now be described.

Active pulse is applied to the gate electrodes 7 so that horizontal lines of the matrix are sequentially actuated. Upon the actuation of horizontal lines of the matrix, R, G and B image signals corresponding to respective pixels are applied to the source bus lines 8.

Accordingly, thin film transistors 1 are turned on by scanning signals applied to the gate lines 7, so that image signals corresponding to respective pixels are sent to pixel electrodes 2, via source bus lines 8, soure electrodes 5 and drain electrodes 3 in order, respectively, By virtue of The image signals, a potential difference is generated between respective pixel electrodes 2 and respective ITO common pixel electrodes 24 adjacent thereto, thereby causing the liquid crystal contained in the space between lower and upper substrates to be polarized. Due to this polarization of liquid crystal, light from light source disposed beneath the lower substrate is polarized during passing through the liquid crystal so that R, G and B picture images can be reproduced through R, G and B color filters.

However, since cross-over parts 9 of gate bus lines 7 and source bus lines 8 are presented in the conventional thin film liquid crystal matrix, crosstalk occurs between video signals carried in source lines 8 and scanning signals carried in gate bus lines 7. As a result, signals may be distorted so that fine and clear picture images can not be obtained. In addition, yield of electric is greatly decreased due to the cross-over parts 9.

### SUMMARY OF THE INVENTION

Therefore, an object of the invention is to provide a thin film liquid crystal matrix with an improved structure capable of eliminating cross-over parts between source bus lines and gate bus lines on the matrix so as to avoid a crosstalk and improve yield of electric signals.

In accordance with the present invention, this object can be accomplished by providing a thin film liquid crystal matrix comprising lower and upper substrates spaced from each other to define a space containing liquid crystal therein, wherein the lower substrate has a plurality of pixel electrodes constituting R, G and B pixels, respectively, a plurality of thin film transistors adapted to actuate the pixels, respectively, and a plurality of gate bus lines adapted to supply scanning signals to the thin film transistors, and the upper substrate has a plurality of source bus lines adapted to supply image signals to pixel electrodes.

### BRIEF DESCRIPTION OF THE DRAWINGS

Other object and aspects of the invention will become apparent from the following description of embodiments with reference to the accompanying drawings in which:
FIG. 1 is a schematic view showing the construction of a lower substrate of a conventional thin film liquid crystal matrix;
FIGs. 2A to 2J are schematic views illustrating a process for manufacturing the lower substrate shown in FIG. 1;
FIGs. 3A to 3C are schematic views illustrating a process for manufacturing an upper substrate of a conventional thin film liquid crystal matrix;
FIG. 4 is a schematic view showing the layout of a thin film liquid crystal matrix in accordance with the present invention;
FIG. 5 is a cross-sectional view of a part of the lower substrate taken along the line A-A' of FIG. 4; and
FIG. 6 is a cross-sectional view similar to FIG. 5, illustrating partially the construction of an upper substrate of the thin film liquid crystal matrix in accordance with the present invention.

### DETAILED DESCRIPTION OF THE PREFERRED EMBODIMENTS

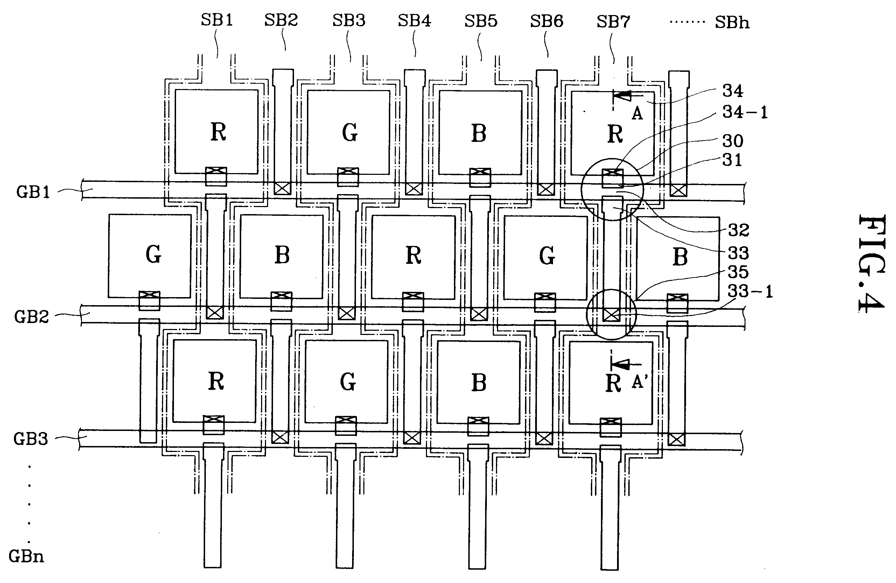

Referring to FIG. 4, there is shown the layout of a thin film liquid crystal matrix. The thin film liquid crystal matrix comprises a lower substrate and an upper substrate. As shown in FIG. 4, the lower substrate comprises a plurality of R, G and B pixel electrodes 34, a plurality of thin film transistors 30 actuated by scanning signals, and a plurality of gate bus lines GB1 to GBn supplying scanning signals to thin film transistors 30. Pixel electrodes 34 are arranged in triangular manner such that three R, G and B pixel electrodes form a triangular shape. Each thin film transistor 30 comprises a drain electrode 31 connected to one end of corresponding pixel electrode 34 by means of a contact 34-1 and a source electrode 33 connected at both ends to adjacent gate bus line by means of contacts 34-1.

On the other hand, the upper substrate comprises a plurality of source bus lines SB1 to SBn patterned to provide upper electrodes each having the same color as that of corresponding pixel electrode 34 on the lower substrate.

In FIG. 4, the solid line indicates the layout of lower substrate, while the phantom line indicates the source bus lines formed on the upper substrate.

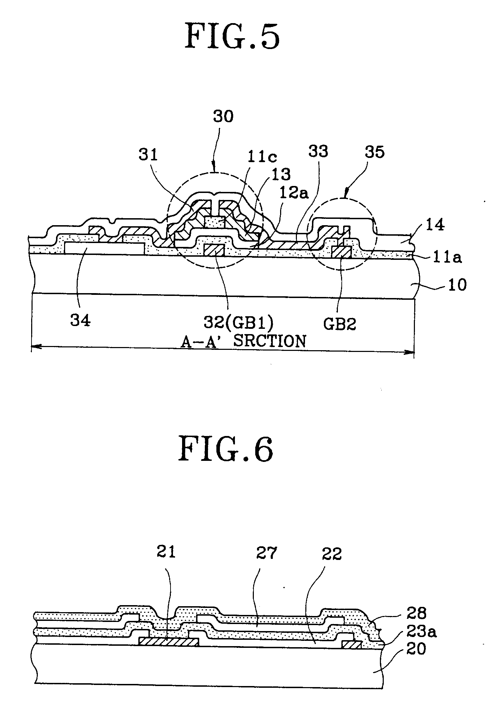

FIG. 5 is a cross-sectional view of a part of the lower substrate taken along the line A-A' of FIG. 4. As shown in the drawing. pixel electrodes 34 and gate electrodes 32 one of which constitute the gate bus line GB1 in the case of FIG. 5 are evaporated on the upper surface of a glass substrate 10 and patterned to have certain patterns, respectively. Thereafter, evaporation of a SiN layer 11a, an a-si layer 12a and a SiN layer 11b is carried out to stack them in order on the glass substrate 10. The SiN layer 11b is then patterned to form SiN layers 11c each constituting an etch stopper layer. Subsequently, a n⁺ a-Si layer 13 is coated. The n⁺a-Si layer 13 and the a-Si layer 12a are then simultaneously etched and patterned such that they are remained at areas corresponding to thin film transistors 30. Thereafter, the SiN layer 11a is partially etched such that each pixel electrode 34 and the gate bus line(GB2 in FIG. 5) adjacent to the pixel electrode 34 are partially exposed. On the n⁺ a-Si layer 13, drain electrodes 31 are evaporated to be in contact with respective exposed portions of pixel electrodes 34. Simultaneously, source electrodes 33 are also evaporated. Between adjacent ends of each drain electrode 31 and each corresponding source electrode 33, the n⁺ a-si layer 13 is partially etched such the SiN layer 11c functioning as an etch stopper is exposed partially through the etched areas. Thereafter, a SiN passivation layer 14 is evaporated on the entire upper surface of the substrate to be in contact with exposed portions of the SiN layer 11C. Thus, the source electrode 33 of each thin film transistor 30 is connected with the corresponding next gate bus line.

On the other hand, FIG. 6 illustrates partially the construction of upper substrate in accordance with the present invention. A Cr layer 21 is evaporated on the upper surface of a glass substrate 20 and patterned to have a certain pattern shown in FIG. 6. Thereafter, color filters 22 corresponding to respective R, G and B pixels are evaporated on the substrate 20 and patterned to have a certain pattern such that the Cr layer 21 is partially exposed at various areas and exposed portions thereof are separated from one another by the color filters 22. In other words, the Cr layer 21 at each area is overlapped at its both ends by respective adjacent ends of color filters 22 adjacent to the Cr layer 21. Thereafter, a SiN layer 23a which is an insulation layer is evaporated on the entire upper surface of substrate 20. On the SiN layer 23a, ITO source bus electrodes 27 each of which is a source bus lineSB having the size corresponding to that of each color filter 22 are evaporated. Thereafter, an evaporation of a SiN passivation layer 28 is carried out. Thus, the manufacturing of the upper substrate is completed.

Operation of the thin film liquid crystal matrix with the above-mentioned construction according to the present invention will now be described.

As a scanning signal is applied to one gate bus line (for example, GB1), the gate electrode 32 of the thin film transistor 30 connected to the gate bus line GB1 receives the scanning signal. The source electrode 33 of the thin film transistor 30 is connected to next gate bus line GB2 thereby causing it to be at its ground voltage level. That is, since only one of gate bus lines GB1 to GBn is actuated by the scanning signal, gate bus lines except the actuated one are maintained at their ground voltage level, so that the source electrode 33 of thin film transistor 30 connected to inactive next gate bus line GB2 is at its ground voltage level.

Accordingly, the thin film transistor 30 is activated by the gate scanning signal. At this time, a potential difference is generated between the pixel electrode 34 of the lower substrate and the corresponding ITO source electrodes 27, that is the source bus line(for example, SB7) of the upper substrate, so that the liquid crystal contained in the space between lower and upper substrates is polarized, thereby enabling the reproduction of picture image.

As scanning and image signals are applied to the gate bus line GB1 and the source bus line SB7, the video signal is sent to the pixel electrode 34 of lower electrode, via the liquid crystal contained between lower and upper substrates. The video signal flows along a current loop which extends from the drain electrode 27 of the thin film transistor 30 to the next gate bus line GB2, via the source electrode 33, As a result, a potential difference is generated between the pixel electrode 34 of the lower substrate and the corresponding ITO source electrodes 27 of the upper substrate, thereby causing the liquid crystal to be polarized so as to exhibit required R, G or B color.

As apparent from the above description, the present invention provides a thin film liquid crystal matrix with an improved construction. That is, the lower substrate of the matrix has pixel electrodes and gate bus lines arranged to provide thin film transistors each having a drain electrode provided by one pixel electrode, a gate electrode provided by one corresponding gate bus line and a source electrode provided by next corresponding gate bus line. Also, the upper substrate of the matrix has source bus lines arranged to function as upper electrodes corresponding to respective pixels. With this arrangement, there is no cross-over part between gate bus lines and source bus lines. As a result, it is possible to improve yield of picture images of the thin film liquid crystal matrix. The thin film liquid crystal matrix of the present invention is particularly effective on thin film liquid crystal color televisions.

Although the preferred embodiments of the invention have been disclosed for illustrative purpose, those skilled in the art will appreciate that various modifications, additions and substitutions are possible, without departing from the scope and spirit of the invention as disclosed in the accompanying claims.

## Claims

1. A thin film liquid crystal matrix comprising lower and upper substrates spaced from each other to define a space containing liquid crystal therein, wherein said lower substrate has a plurality of pixel electrodes constituting R, G and B pixels, respectively, a plurality of thin film transistors for actuating said pixels, respectively, and a plurality of gate bus lines for supplying scanning signals to said thin film transistors, and said upper substrate has a plurality of source bus lines for supplying image signals to pixel electrodes.

2. A thin film liquid crystal matrix in accordance with Claim 1, wherein each of said thin film transistors has a drain electrode provided by one pixel electrode, a gate electrode provided by one corresponding gate bus line and a source electrode provided by next corresponding gate bus line.

3. A thin film liquid crystal matrix in accordance with Claim 1, wherein said source bus lines are patterned to provide upper electrodes each having the same color as that of corresponding pixel electrode on the lower substrate.
